# EUROPÄISCHE PATENTANMELDUNG

(11) **EP 4 838 702 A1**
(43) Veröffentlichungstag der Anmeldung: **11.11.2026**
(21) Anmeldenummer: 26166291.0
(22) Anmeldetag: 20.03.2026
(51) Int. Cl.: H01R 4/2406, F21V 21/002, F21V 21/35, F21V 23/06, H01R 24/00, H01R 33/96, H01R 33/955, H01R 25/14

(54) **VERSORGUNGSVORRICHTUNG ZUR BEFESTIGUNG AN EINER FLÄCHIGEN TRÄGERANORDNUNG MIT ELEKTRISCHEN LEITERBAHNEN**

(30) Priorität: 20.03.2025 AT 501912025
(71) Anmelder: H4X e.U., 8055 Graz (AT)
(72) Erfinder: HIERZER, Andreas, 8010 Graz (AT)
(74) Vertreter: Isarpatent

(57) **Zusammenfassung**

Vorgeschlagen wird eine Versorgungsvorrichtung (1) zur Befestigung an einer flächigen Trägeranordnung (200) mit elektrischen Leiterbahnen (233). Die Versorgungsvorrichtung (1) weist ein Gehäuse (2), Kontaktierelemente (3) und eine mit den Kontaktierelementen elektrisch gekoppelte Anordnung (5) elektrischer und/oder elektronischer Bauteile auf und ist mit einem elektrischen Verbraucher (377) für dessen Versorgung koppelbar oder gekoppelt. Die Kontaktierelemente sind jeweils für ein Einstechen in eine Oberfläche (237) der Trägeranordnung vorgesehen und jeweils spitz und/oder scharf ausgebildet. Die Kontaktierelemente sind in eine Nichtkontaktierstellung bringbar, in der sie im Gehäuse aufgenommen sind. Die Kontaktierelemente sind in eine Kontaktierstellung bringbar und hierzu mittels manueller Einwirkung auf die Versorgungsvorrichtung aus dem Gehäuse ausfahrbar, um mittels der Kontaktierelemente in die Oberfläche der Trägeranordnung einzustechen und mindestens zwei der Kontaktierelemente in Kontakt mit jeweils einer der Leiterbahnen zu bringen. Die Versorgungsvorrichtung weist mindestens eine Sicherheitsanordnung (8) auf, mittels welcher in einer Sperrkonfiguration derselben ein Ausfahren der Kontaktierelemente mechanisch verhindert ist.

## Beschreibung

### GEBIET DER ERFINDUNG

Die Erfindung betrifft eine Versorgungsvorrichtung zur Befestigung an einer flächigen Trägeranordnung mit elektrischen Leiterbahnen. Insbesondere kann die Versorgungsvorrichtung hierbei zum Versorgen eines elektrischen Verbrauchers genutzt werden.

### TECHNISCHER HINTERGRUND

Die Befestigung von elektrischen Verbrauchern etwa an einer Wand einer Räumlichkeit, und die Versorgung dieser Verbraucher jeweils ausgehend von der Wand über ein zugeordnetes, in oder auf der Wand verlegtes Kabel ist weithin verbreitet. Auch die Anbringung elektrischer Verbraucher an einer Decke einer Räumlichkeit und deren Versorgung mittels eines zugeordneten Kabels in oder auf der Decke ist bekannt. Die elektrischen Verbraucher können hierbei den unterschiedlichsten Funktionen dienen, beispielsweise einer Beleuchtung der Räumlichkeit, alternativ jedoch vielen anderen Zwecken. Die Flexibilität der Anordnung und Nutzung derartiger Verbraucher ist jedoch vielfach ganz erheblich eingeschränkt.

Die WO 2023 / 016 661 A1 beschreibt eine Flächenstromversorgung im Niedervoltbereich an einer Rauminnenwand. Hierzu ist ein Trägersystem mit einer magnetischen oder magnetisierbaren Haltelage sowie mit einer Vielzahl an parallel zueinander verlaufenden Flächenleiterbahnen vorgesehen. Verschiedene Funktionsobjekte, wie beispielsweise Lampen, können an der Wand gehalten und mit elektrischer Energie versorgt werden. Die Funktionsobjekte sind zur Realisierung der elektrischen Versorgung dieser mit einem oder mehreren Stromaufnehmern ausgestattet, die ebenfalls in der WO 2023 / 016 661 A1 beschrieben werden. Zur Kontaktierung der Flächenleiterbahnen weisen die Stromaufnehmer jeweils mit nadelförmiger Gestalt ausgebildete Kontaktelemente auf, wobei vorgesehen ist, dass die Kontaktelemente in das Trägersystem eindringen. Der Stromaufnehmer soll hierbei reversibel befestigbar sowie unabhängig von Lage und Orientierung auf dem flachen Trägersystem verwendbar sein.

Wenngleich die in der WO 2023 / 016 661 A1 beschriebene Herangehensweise bereits einen vorteilhaften, sicheren und flexiblen Weg bietet, elektrische Verbraucher von Funktionsobjekten zu versorgen, wäre es vor diesem Hintergrund wünschenswert, über eine Versorgungsvorrichtung zu verfügen, die insbesondere hinsichtlich deren Handhabung noch weiter verbessert ist.

### ZUSAMMENFASSUNG DER ERFINDUNG

Es ist somit eine Aufgabe der vorliegenden Erfindung, eine Versorgungsvorrichtung zur Befestigung an einer flächigen Trägeranordnung bereitzustellen, die in ihrer Handhabung noch weiter verbessert ist, insbesondere noch einfacher und angenehmer handhabbar ist.

Erfindungsgemäß wird diese Aufgabe durch eine Versorgungsvorrichtung mit den Merkmalen des Anspruchs 1 gelöst.

Demgemäß wird eine Versorgungsvorrichtung zur Befestigung an einer flächigen Trägeranordnung mit elektrischen Leiterbahnen vorgeschlagen, wobei die Versorgungsvorrichtung ein Gehäuse, Kontaktierelemente und eine mit den Kontaktierelementen elektrisch gekoppelte Anordnung elektrischer und/oder elektronischer Bauteile aufweist. Die Versorgungsvorrichtung ist mit einem elektrischen Verbraucher für dessen Versorgung koppelbar oder gekoppelt.

Bei der erfindungsgemäßen Versorgungsvorrichtung sind die Kontaktierelemente jeweils für ein Einstechen in eine Oberfläche der Trägeranordnung vorgesehen und jeweils spitz und/oder scharf ausgebildet. Die Kontaktierelemente sind hierbei in eine Nichtkontaktierstellung bringbar, in der die Kontaktierelemente in dem Gehäuse aufgenommen sind. Ferner sind die Kontaktierelemente in eine Kontaktierstellung bringbar und hierzu mittels manueller Einwirkung auf die Versorgungsvorrichtung aus dem Gehäuse ausfahrbar, um mittels der Kontaktierelemente in die Oberfläche der Trägeranordnung einzustechen und mindestens zwei der Kontaktierelemente in Kontakt mit jeweils einer der Leiterbahnen zu bringen.

Erfindungsgemäß weist die Versorgungsvorrichtung mindestens eine Sicherheitsanordnung auf, mittels welcher in einer Sperrkonfiguration derselben ein Ausfahren der Kontaktierelemente mechanisch verhindert ist.

Eine Idee der vorliegenden Erfindung besteht darin, in der Nichtkontaktierstellung die Kontaktierelemente im Gehäuse aufzunehmen, zum Kontaktieren mittels des Einstechens in die Oberfläche aus dem Gehäuse auszufahren, und dieses Ausfahren mittels der Sicherheitsanordnung in deren Sperrkonfiguration zu verhindern. Ein unbeabsichtigtes Ausfahren der spitzen und/oder scharfen Kontaktierelemente kann somit verhindert werden. Auf diese Weise wird die Handhabung der Versorgungsvorrichtung, insbesondere wenn diese noch nicht an der Trägeranordnung angebracht ist und auch während des Anbringens, noch angenehmer und sicherer möglich. Indem das Ausfahren der Kontaktierelemente mittels der Sicherheitsanordnung verhinderbar ist, werden Berührungen der Kontaktierelemente, insbesondere deren spitzer und/oder scharfer Bereiche, bei der manuellen Handhabung sowohl mit Händen und Fingern als auch mit Gegenständen vermieden. Somit kann die Versorgungsvorrichtung einfach, angenehm und sicher durch eine Bedien- oder Monteursperson gehandhabt werden. Zudem können Beschädigungen der Oberfläche der Trägeranordnung oder anderer Gegenstände durch mechanischen Kontakt mit den Kontaktierelementen, etwa ein Verkratzen oder dergleichen, ebenfalls vermieden werden.

Vorteilhafte Ausgestaltungen und Weiterbildungen der Erfindung ergeben sich aus den weiteren Unteransprüchen sowie aus der Beschreibung unter Bezugnahme auf die Figuren.

In einer Ausgestaltung ist die Sicherheitsanordnung manuell in eine Freigabekonfiguration bringbar, in der das Ausfahren der Kontaktierelemente ermöglicht ist. In dieser Weise kann die Sicherheitsanordnung einfach, zuverlässig und sicher betätigt werden, um sodann beabsichtigterweise die Kontaktierelemente ausfahren zu können.

Gemäß einer Weiterbildung beinhaltet die Versorgungsvorrichtung eine Rückstelleinrichtung, welche dafür ausgebildet ist, die Kontaktierelemente mindestens in deren Kontaktierstellung direkt oder indirekt für ein selbsttätiges Einnehmen der Nichtkontaktierstellung vorzuspannen. Auf diese Weise kann zum Beispiel erreicht werden, dass die Kontaktierelemente beim beabsichtigten Abnehmen der Versorgungsvorrichtung von der Trägeranordnung durch eine Bedien- oder Monteursperson, oder auch bei einem Lösen der Versorgungsvorrichtung von der Trägeranordnung in unbeabsichtigter Weise, wie etwa durch versehentlichen Schlag, Stoß oder versehentliche anderweitige übermäßige Krafteinwirkung, automatisch in das Gehäuse eingefahren werden. Berührungen der Kontaktierelemente mit Körperteilen wie Fingern oder Handflächen beim Aufheben der Versorgungsvorrichtung, etwa vom Boden, sowie zusätzliche Beschädigungen beispielsweise der Bodenoberfläche, werden hierdurch in zuverlässiger und sicherer Weise vermieden. Dies macht die Handhabung der Versorgungsvorrichtung noch angenehmer.

Insbesondere kann vorgesehen sein, dass das Ausfahren der Kontaktierelemente mittels der manuellen Einwirkung das Überwinden mindestens einer Federkraft beinhaltet. Auf diese Weise kann zum Beispiel ein Vorspannen der Kontaktierelemente in Richtung der Nichtkontaktierstellung dieser in einfacher und zweckmäßiger Weise mit Hilfe der manuellen Einwirkung erreicht werden.

In einer Ausgestaltung ist die Sicherheitsanordnung dafür eingerichtet, selbsttätig die Sperrkonfiguration einzunehmen, wenn sich die Kontaktierelemente in deren Nichtkontaktierstellung befinden. Somit kann noch zuverlässiger sichergestellt werden, dass die Kontaktierelemente nicht unbeabsichtigt ausgefahren werden können, was die Handhabung der Versorgungsvorrichtung noch weiter verbessert.

Gemäß einer Ausgestaltung ist vorgesehen, dass das Gehäuse ein inneres Gehäuseteil und ein äußeres Gehäuseteil aufweist, wobei das innere und äußere Gehäuseteil relativ zueinander bewegbar miteinander gekoppelt sind und durch eine Bewegung des inneren und äußeren Gehäuseteils relativ zueinander mittels des manuellen Einwirkens die Kontaktierelemente aus dem Gehäuse ausfahrbar sind. Somit kann das Ausfahren der Kontaktierelemente manuell auf einfache, übersichtliche Weise bewirkt werden. Ferner kann auf diese Weise eine Kraft zum Einstechen der Kontaktierelemente sowohl wirkungsvoll als auch sicher aufgebracht werden.

In einer Weiterbildung sind hierbei die Kontaktierelemente gemeinsam mit dem inneren Gehäuseteil relativ zu dem äußeren Gehäuseteil, insbesondere entlang einer Axialrichtung des Gehäuses, verlagerbar. Dies kann zu einem vergleichsweise einfachen Aufbau der Versorgungsvorrichtung beitragen.

Insbesondere ragt das innere Gehäuseteil in der Nichtkontaktierstellung der Kontaktierelemente abschnittsweise aus dem äußeren Gehäuseteil. Auch dies trägt zu einem einfachen Aufbau der Versorgungsvorrichtung bei, macht es möglich, den aktuellen Ein-/Ausfahrzustand der Kontaktierelemente auch am Gehäuse zu erkennen, und kann ferner dazu beitragen, die Implementierung der Sicherheitsanordnung zu erleichtern.

In einer Ausgestaltung sind die Kontaktierelemente an einer Stirnseite des äußeren Gehäuseteils aus diesem ausfahrbar. Eine derartige Stirnseite kann sich beispielsweise vorteilhaft für ein Anliegen an der Trägeranordnung eignen.

Gemäß einer Weiterbildung weist die Sicherheitsanordnung einen manuell betätigbaren Sperr- und Freigabemechanismus auf, dessen Betätigung die Sicherheitsanordnung in deren Freigabekonfiguration bringt und ermöglicht, das innere Gehäuseteil relativ zu dem äußeren Gehäuseteil zu bewegen, insbesondere in das äußere Gehäuseteil hinein zu bewegen, bevorzugt einzudrücken, weiter bevorzugt derart einzudrücken, dass das innere Gehäuseteil im Wesentlichen vollständig in dem äußeren Gehäuseteil aufgenommen ist. Die Funktionsweise einer derartigen Sicherheitsanordnung ist für eine Bedien- bzw. Monteursperson leicht überschaubar, was ebenfalls zu einer einfachen und angenehmen Handhabung der Versorgungsvorrichtung weiter beiträgt.

In einer Ausgestaltung ist der Sperr- und Freigabemechanismus mit mindestens einem federbelasteten, bewegbaren Sperrelement ausgebildet, mittels desselben eine Bewegung des inneren Gehäuseteils relativ zum äußeren Gehäuseteil, insbesondere ein manuelles Eindrücken des inneren Gehäuseteils in das äußere Gehäuseteil, blockierbar ist. Das Sperrelement ist hierbei zur Freigabe gegen die Federbelastung manuell bewegbar. Auf diese Weise gelingt ein einfacher, wirkungsvoller sowie bauraumsparender Aufbau des Sperr- und Freigabemechanismus. Insbesondere kann mittels der Federbelastung hierbei das Sperrelement zudem in effektiver Weise selbsttätig zur Realisierung der Sperrkonfiguration eine Sperrstellung einnehmen.

Gemäß einer noch weiteren Weiterbildung weist der Sperr- und Freigabemechanismus mindestens zwei an einem Umfang des inneren Gehäuseteils federbelastet bewegbar angeordnete, als Druckbetätigungselemente ausgebildete derartige Sperrelemente auf, insbesondere zwei an gegenüberliegenden Seiten des inneren Gehäuseteils angeordnete derartige Sperrelemente. Auf diese Weise kann ein unbeabsichtiges Ausfahren der Kontaktierelemente noch zuverlässiger verhindert werden. Um die Sicherheitsanordnung in deren Freigabekonfiguration zu bringen, werden die mindestens zwei Druckbetätigungselemente insbesondere durch manuellen Druck, vorzugsweise gleichzeitig, betätigt. Die Freigabe der Sicherheitsanordnung erfordert somit vorteilhaft ein gezieltes manuelles Eingreifen, wodurch eine unbeabsichtigte Freigabe noch besser vermieden werden kann.

Das oder die Sperrelement(e) ist bzw. sind in einer Ausgestaltung an einem Endabschnitt des inneren Gehäuseteils, der in einem Zustand, in dem die Kontaktierelemente sich in deren Nichtkontaktierstellung befinden, aus dem äußeren Gehäuseteil ragt, angeordnet und ragt bzw. ragen bei dieser Ausgestaltung in unbetätigtem Zustand von dem inneren Gehäuseteil weg über einen Rand des äußeren Gehäuseteils. Dies ermöglicht es, mit Hilfe des Sperrelements bzw. der Sperrelemente in einfacher und wirkungsvoller Weise die Bewegung des inneren Gehäuseteils und das Ausfahren der Kontaktierelemente zu blockieren, wenn auf das/die Sperrelement(e) keine äußere Kraft zur Betätigung aufgebracht wird.

Insbesondere kann/können das/die Sperrelement(e) jeweils als ein bezüglich des inneren Gehäuseteils im Wesentlichen radial verschiebbar an oder in dem inneren Gehäuseteil gelagerter, durch ein Federelement für ein Vorstehen in Richtung radial nach außen federbelasteter Sperrkörper ausgebildet sein.

In einer Ausgestaltung weist das innere Gehäuseteil Führungsvorsprünge auf, die mit korrespondierenden Führungsausnehmungen des äußeren Gehäuseteils zusammenwirken und hierdurch das innere Gehäuseteil bei dessen Bewegung relativ zum äußeren Gehäuseteil bei dem Ausfahren oder Einfahren der Kontaktierelemente führen. Dies trägt dazu bei, eine definierte Relativbewegung von innerem und äußerem Gehäuseteil zuverlässig, gleichmäßig und ohne Klemmen oder Schwergängigkeit zu realisieren, was wiederum vorteilhaft zu einer guten Handhabung der Versorgungsvorrichtung beiträgt.

Das innere Gehäuseteil und das äußere Gehäuseteil können insbesondere mittels mindestens einer zwischen den Gehäuseteilen angeordneten, axial wirkenden Feder relativ zueinander federbelastet sein. Auf diese Weise kann zum Beispiel erreicht werden, dass die Kontaktierelemente deren Nichtkontaktierstellung selbsttätig einnehmen, während deren Ausfahren eine gezielte Einwirkung entgegen der Federkraft der axial wirkenden Feder beinhaltet.

In einer Ausgestaltung ist die Anordnung elektrischer und/oder elektronischer Bauteile auf einer Leiterplatte oder mehreren Leiterplatten vorgesehen, wobei die Leiterplatte(n) an dem inneren Gehäuseteil befestigt und insbesondere in dem inneren Gehäuseteil aufgenommen sind. Somit kann bei dem Ein- und Ausfahren der Kontaktierelemente eine Relativbewegung dieser relativ zu den elektrischen und/oder elektronischen Bauteilen vorteilhaft vermieden werden, was dazu beiträgt, elektrische Verbindungswege in einfacher Weise zu implementieren.

Bei einer Weiterbildung weist die Versorgungsvorrichtung eine Befestigungseinrichtung auf, welche ein lösbares Fixieren der Versorgungsvorrichtung an der Trägeranordnung, insbesondere in einem Zustand, in dem die Kontaktierelemente sich in der Kontaktierstellung befinden, ermöglicht. Vorteilhaft kann somit zusätzlich zu der elektrischen Ankopplung an die Trägeranordnung auch eine mechanische Befestigung erreicht werden.

In einer weiteren Weiterbildung ist die Befestigungseinrichtung mit einem oder mehreren Magneten, insbesondere mit einem oder mehreren Permanentmagneten, ausgebildet, die mit einem magnetisierbaren oder magnetisierten Material an oder in der Oberfläche der Trägeranordnung zusammenwirken können. Dies ermöglicht eine schnelle und einfache Befestigung, die leicht lösbar ist und eine Beschädigung oder ästhetische Beeinträchtigung der Oberfläche der Trägeranordnung vermeidet.

Insbesondere können die Magneten der Befestigungseinrichtung an dem inneren Gehäuseteil befestigt sein. Auf diese Weise können die Magneten bei dem Ausfahren der Kontaktierelemente zugleich näher an die Trägeranordnung heranbewegt werden und mit dem magnetisierten oder magnetisierbaren Material wechselwirken. Somit gelingt es mittels Mitbewegens der Magneten mit dem inneren Gehäuseteil, die Kontaktierelemente nach deren Einstechen in die Trägeranordnung noch zuverlässiger in dieser zu halten.

In einer bevorzugten Ausgestaltung weist das Gehäuse eine runde, insbesondere kreisrunde, Außenkontur auf. Vorteilhaft kann dies eine Kopplung mit dem Verbraucher in vielerlei Stellungen ermöglichen. Insbesondere bei kreisrunder Außenkontur kann der Verbraucher zum Beispiel ein einfacher Weise beliebig um die Versorgungsvorrichtung verdrehbar mit dieser gekoppelt werden.

Vorzugsweise ist das äußere Gehäuseteil mit einer im Wesentlichen kreiszylindrischen Außenform oder einer leicht kreiskegelstumpfförmigen Außenform ausgebildet.

Gemäß einer Weiterbildung ist, wenn sich die Kontaktierelemente in deren Kontaktierstellung befinden, das Gehäuse in einer runden Ausnehmung des Verbrauchers aufnehmbar. Insbesondere kann vorgesehen sein, dass hierbei das in der runden Ausnehmung des Verbrauchers aufgenommene Gehäuse in einer Umfangsrichtung des Gehäuses von dem Verbraucher umschlossen ist und in einer Axialrichtung des Gehäuses mit dem Verbraucher überlappt oder in der Axialrichtung im Wesentlichen vollständig in der runden Ausnehmung des Verbrauchers aufgenommen ist. Dies ermöglicht eine zuverlässige Kopplung und mechanische Ausrichtung des Verbrauchers relativ zu der Versorgungsvorrichtung. Zudem kann die Versorgungsvorrichtung in der Ausnehmung ästhetisch vorteilhaft verborgen werden.

Das Gehäuse der Versorgungsvorrichtung kann insbesondere mit Ausnehmungen versehen sein, durch die die Kontaktierelemente mittels der manuellen Einwirkung ausfahrbar sind.

In einer Ausgestaltung sind die Kontaktierelemente als Kontaktnadeln ausgebildet. Dies ermöglicht ein wirkungsvolles, zuverlässiges Einstechen zur Herstellung eines Kontakts mit Leiterbahnen der Trägeranordnung.

Vorzugsweise sind die elektrischen Leiterbahnen der Trägeranordnung durch eine oder mehrere Deckschicht(en) der Trägeranordnung bedeckt und die Kontaktierelemente jeweils für ein Durchstechen der Deckschicht oder Deckschichten ausgebildet. Somit sind die Leiterbahnen ästhetisch und sicher abgedeckt, wobei zugleich eine zuverlässige Kontaktierung möglich wird.

Insbesondere weisen nebeneinander angeordnete der elektrischen Leiterbahnen bei aktivierter Spannungsversorgung abwechselnde Polarität auf, mit anderen Worten wechselt hierbei die Polarität der Leiterbahnen quer zu deren Erstreckungsrichtung regelmäßig von einer Leiterbahn zur jeweils nächsten.

In einer Ausgestaltung ist vorgesehen, dass die Versorgungsvorrichtung eine erste elektrische Kontakteinrichtung aufweist, die mit den Kontaktierelementen gebildet ist, und eine zweite elektrische Kontakteinrichtung zur Kontaktierung und Versorgung des Verbrauchers aufweist. Dies trägt zu einer einfach herstellbaren und lösbaren elektrischen Kopplung von Versorgungsvorrichtung und Verbraucher bei.

Gemäß einer Weiterbildung ist die zweite Kontakteinrichtung mit konzentrischen Kreis- oder Ringkontakten, ausgebildet, welche jeweils durch einen federnden Drucckontakt des Verbrauchers kontaktierbar sind, insbesondere derart, dass ein ungehindertes Verdrehen des Verbrauchers um das Gehäuse der Versorgungsvorrichtung ohne Unterbrechung der Stromversorgung des Verbrauchers ermöglicht ist.

Bei anderen Weiterbildungen kann die zweite Kontakteinrichtung mit einer Komponente einer Stecker-Buchse-Verbindung, beispielsweise mit einer Buchse zur Aufnahme eines Niedervoltsteckers, etwa eines koaxialen Niedervolt-Steckverbinders oder DC-Steckers, oder mit einer USB-Buchse, insbesondere einer USB-C-Buchse, ausgebildet sein.

In einer Ausgestaltung ist das innere Gehäuseteil in einem Spritzgießverfahren oder einem 3D-Druck-Verfahren hergestellt.

In einer Ausgestaltung ist das äußere Gehäuseteil in einem Spritzgießverfahren oder einem 3D-Druck-Verfahren hergestellt.

Das innere und/oder äußere Gehäuseteil kann/können insbesondere mit einem Kunststoffmaterial gebildet sein.

Gemäß einer Weiterbildung kann der elektrische Verbraucher eine dimmbare Leuchte oder eine nicht-dimmbare Leuchte sein.

Gemäß einer weiteren Weiterbildung kann der elektrische Verbraucher ein Ladegerät oder eine Anzeigevorrichtung oder eine Stromquelle für einen weiteren Verbraucher sein. In einer alternativen Ausgestaltung kann die Versorgungsvorrichtung als ein Ladegerät, beispielsweise für ein Smartphone oder ein Laptop, dienen.

Die obigen Ausgestaltungen und Weiterbildungen der Erfindung lassen sich, sofern dies sinnvoll ist, beliebig miteinander kombinieren. Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die Erfindung wird nachfolgend anhand der in den Figuren der Zeichnungen angegebenen Ausführungsbeispiele näher erläutert. Es zeigen hierbei:
- Fig. 1: eine beispielhafte flächige Trägeranordnung umfassend elektrische Leiterbahnen;
- Fig. 2: eine Versorgungsvorrichtung gemäß einem Ausführungsbeispiel, die an der Trägeranordnung der Fig. 1 befestigbar ist, in perspektivischer Ansicht;
- Fig. 3: die Trägeranordnung gemäß Fig. 1, die an der Trägeranordnung befestigte Versorgungsvorrichtung gemäß Fig. 2, und einen elektrischen Verbraucher, der als eine Beleuchtungsvorrichtung ausgebildet, an der Trägeranordnung befestigt und mit der Versorgungsvorrichtung zur elektrischen Versorgung gekoppelt ist, in einem Mittelschnitt;
- Fig. 4: die Versorgungsvorrichtung gemäß dem Ausführungsbeispiel der Fig. 2 in einer Explosionsansicht;
- Fig. 5: eine erste bestückte Leiterplatte der Versorgungsvorrichtung gemäß dem Ausführungsbeispiel der Fig. 2, perspektivisch von einer ersten Seite, mit darauf angeordneten Kontaktierelementen einer ersten elektrischen Kontakteinrichtung;
- Fig. 6: die erste bestückte Leiterplatte der Fig. 5, perspektivisch von einer der ersten Seite entgegengesetzten zweiten Seite;
- Fig. 7: eine zweite bestückte Leiterplatte der Versorgungsvorrichtung gemäß einer Variante des Ausführungsbeispiels der Fig. 2, perspektivisch von einer mit einer zweiten elektrischen Kontakteinrichtung versehenen Seite;
- Fig. 8: eine Ansicht der Versorgungsvorrichtung gemäß dem Ausführungsbeispiel der Fig. 2 von einer Seite her, die nach Befestigen der Versorgungsvorrichtung an der Trägeranordnung letzterer zugewandt ist;
- Fig. 9: eine Ansicht der Versorgungsvorrichtung gemäß dem Ausführungsbeispiel der Fig. 2 in einem Schnitt IX-IX, wie in Fig. 8 angedeutet, in einem Zustand mit ausgefahrenen Kontaktierelementen;
- Fig. 10: eine Ansicht der Versorgungsvorrichtung gemäß dem Ausführungsbeispiel der Fig. 2 in einem Mittellängsschnitt in einem Zustand mit eingefahrenen Kontaktierelementen; und
- Fig. 11: eine Ansicht der Versorgungsvorrichtung gemäß dem Ausführungsbeispiel der Fig. 2 in einem Mittellängsschnitt XI-XI, wie in Fig. 8 angedeutet, in einem Zustand mit ausgefahrenen Kontaktierelementen, zusammen mit Abschnitten der Trägeranordnung der Fig. 1 und eines schematisch gezeigten Verbrauchers.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.

Die Elemente der Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts anderes angegeben ist - jeweils mit denselben Bezugszeichen versehen.

### BESCHREIBUNG VON AUSFÜHRUNGSBEISPIELEN

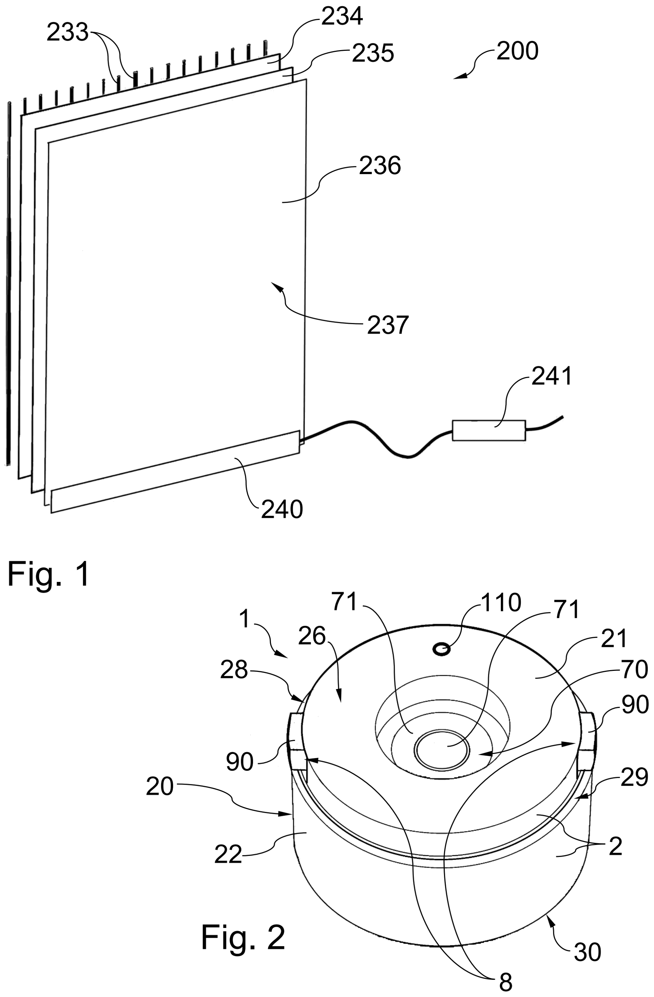

Fig. 1 zeigt eine flächige Trägeranordnung 200, die mit mehreren Schichten 233-236 gebildet ist und sich beispielhaft in einer Ebene ausdehnt, in einer Explosionsansicht. Es versteht sich, dass die in Fig. 1 rechteckig dargestellte Trägeranordnung 200 stattdessen mit einer anderen Form gebildet sein kann. Die Trägeranordnung 200 kann als eine eigenständige oder selbsttragende Komponente ausgebildet sein, etwa als eine Platte, oder die Trägeranordnung 200 kann auf einer eigenständigen Komponente angeordnet sein, beispielsweise durch Aufbringen ihrer Schichten, als Ganzes oder aufeinanderfolgend, auf einen flächigen Untergrund.

Vorzugsweise ist die Trägeranordnung 200 dafür vorgesehen, in einem Innenraum eines Gebäudes im Wandbereich oder im Deckenbereich oder beiden angeordnet zu werden. Insbesondere kann die Trägeranordnung 200 als eine Verkleidungsplatte, etwa eine modifizierte Gipskartonplatte, ausgebildet sein, die beispielsweise vor einer Rohwand des Innenraums oder unterhalb einer Rohdecke des Innenraums befestigt wird. Eine derartige Verkleidungsplatte kann als eine elektrifizierte Trockenbauplatte bezeichnet werden. Stattdessen kann die Trägeranordnung 200 jedoch als eine mit mehreren Schichten gebildete Tapete ausgebildet sein, die auf der Wand und/oder Decke des Innenraums verklebt wird. Wiederum alternativ hierzu können einzelne Schichten der Trägeranordnung 200 oder Kombinationen dieser Schichten nacheinander auf eine Wand und/oder Decke des Innenraums als Untergrund aufgebracht werden.

Die in Fig. 1 schematisch dargestellte Trägeranordnung 200 umfasst eine Vielzahl elektrischer Leiterbahnen 233, die jeweils gleichartig, streifenförmig und langgestreckt ausgebildet sind und parallel nebeneinander vorzugsweise in gleichen Abständen zueinander angeordnet sind. In Fig. 1 erstrecken sich für eine dort beispielhaft gezeigte Implementierung im Wandbereich die Leiterbahnen 233 mit deren Längsrichtungen im Wesentlichen in vertikaler Richtung bezüglich der Räumlichkeit, was jedoch nicht zwingend ist. Die Längsrichtungen der Leiterbahnen 233 könnten stattdessen horizontal oder mit einer beliebigen anderen Orientierung parallel zueinander in der Wandoberfläche verlaufen. Bei einer anderen beispielhaften Implementierung in einem Deckenbereich, die in Fig. 1 nicht explizit dargestellt ist, jedoch analog der Implementierung in Fig. 1 ausgeführt sein kann, sind die Leiterbahnen 233 sich in einer Fläche oder Ebene der Decke erstreckend und jeweils parallel zueinander angeordnet. Insbesondere können sich bei einer Implementierung im Deckenbereich die Leiterbahnen 233 in einer horizontalen Ebene erstrecken, wobei jedoch bei schräger Ausbildung der Raumdecke oder eines Bereichs dieser eine Anordnung in einer zur Horizontalen schrägen, also geneigten Ebene denkbar ist. Innerhalb der Fläche oder Ebene der Decke sind verschiedene Orientierungen der zueinander parallelen Leiterbahnen 233 vorstellbar.

Bei der Trägeranordnung 200 sind die Leiterbahnen 233 durch mehrere Deckschichten 234, 235 und 236 bedeckt. Beispielsweise kann die Schicht 234 als eine Trägerlage ausgebildet sein, die die Leiterbahnen 233 trägt. Die von der Seite der Räumlichkeit her betrachtet nächste, auf der Schicht 234 angeordnete Schicht 235 kann als eine Haltelage ausgebildet sein und ein magnetisches oder magnetisierbares Material aufweisen, dessen Funktion nachstehend noch erläutert wird. Die Haltelage 235 kann bei einigen beispielhaften Ausführung mittels einer Magnetspachtelmasse erzeugt werden.

Auf der Schicht 235 kann eine weitere Schicht 236 angeordnet sein, etwa eine Farbschicht, die eine Oberfläche 237 der Trägeranordnung 200 bedeckt und beispielsweise eine gewünschte Farbgebung und Oberflächenstruktur ermöglicht.

Die Schichtenabfolge in Fig. 1 ist beispielhaft angegeben, jedoch sind andere Schichtabfolgen und Kombinationen von Schichten möglich, sofern Leiterbahnen 233 und ein magnetisches oder magnetisierbares Material in diesen Schichten untergebracht werden können. Bei der Trägeranordnung 200 der Fig. 1 sind somit an oder in der Oberfläche 237 das magnetische oder magnetisierbare Material, und die Leiterbahnen 233, angeordnet, wobei die Leiterbahnen 233 vorzugsweise durch mindestens eine Schicht der Trägeranordnung 200, etwa Schicht 234, abgedeckt sind, die eine elektrische Isolationswirkung bereitstellt. Die Leiterbahnen 233 verlaufen mit anderen Worten somit um die Dicken der bedeckenden Schichten 234-236 hinter der Oberfläche 237.

Die elektrischen Leiterbahnen 233 werden bei der Trägeranordnung 200 der Fig. 1 durch eine schienenförmige oder streifenförmige Einspeiseeinrichtung 240 mit Gleichspannung als Niederspannung, beispielsweise einer elektrischen Spannung von bis zu etwa 48 Volt, insbesondere etwa 24 Volt oder etwa 48 Volt, mit abwechselnder Polarität versorgt. Somit wechselt die Polarität der Leiterbahnen 233 von einer dieser zur nächsten regelmäßig.

Die Verbindung mit einem Stromnetz zur Versorgung der Einspeiseeinrichtung 240 wird beispielsweise über ein Betriebsgerät 241 hergestellt, welches eingerichtet ist, die Wechselspannung des Stromnetzes von beispielsweise 230 V in die zur Versorgung der Leiterbahnen 233 vorgesehene Niederspannung zu konvertieren.

Die Oberfläche 237 bildet somit vorzugsweise eine Innenwandfläche der Räumlichkeit oder einen Teil einer solchen oder eine innere Deckenfläche der Räumlichkeit oder einen Teil einer solchen. Es versteht sich, dass in der Räumlichkeit Innenwandflächen und/oder innere Deckenflächen in verschiedenster Kombination als oder mit der Trägeranordnung 200 ausgebildet werden können. Auf der Oberfläche 237 können in flexibler, lösbarer Weise ein oder mehrere elektrische Verbraucher angeordnet, magnetisch fixiert und über die Trägeranordnung 200 mit elektrischer Leistung für den Betrieb des/der Verbraucher(s) versorgt werden.

Bei den Verbrauchern kann es sich um dimmbare oder nicht-dimmbare Beleuchtungseinrichtungen, wie etwa Leuchten oder ausrichtbare Strahler, um Anzeigevorrichtungen wie etwa ein Fernsehgerät oder einen Monitor oder einen digitalen Bilderrahmen, ein Smartphone oder ein Laptop, um Ladegeräte, etwa ein Ladegerät für ein Smartphone oder ein Laptop, oder um Stromquellen für jeweils einen weiteren, nachgeschalteten Verbraucher handeln. Die Versorgungsvorrichtung kann in einigen Ausgestaltungen somit als Ladegerät funktionieren. Die Oberfläche 237 kann somit hochflexibel genutzt werden, um elektrische Verbraucher verschiedenster Art anzubringen und zu versorgen, wobei der Verbraucher jeweils durch dessen magnetische Fixierung nicht nur leicht anzubringen, sondern ebenso einfach auch wieder zu entfernen und neu zu fixieren ist.

Die Versorgung des elektrischen Verbrauchers erfolgt jeweils mittels einer Versorgungsvorrichtung 1, die an der flächigen Trägeranordnung 200 befestigbar und mit dem Verbraucher für dessen elektrische Versorgung koppelbar ist. Eine Versorgungsvorrichtung 1 gemäß einem Ausführungsbeispiel ist nachfolgend beschrieben.

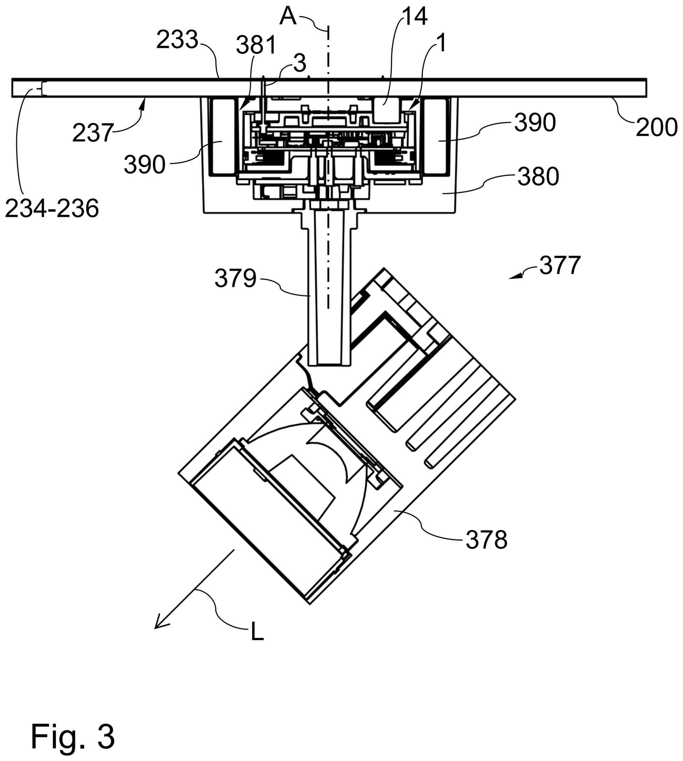

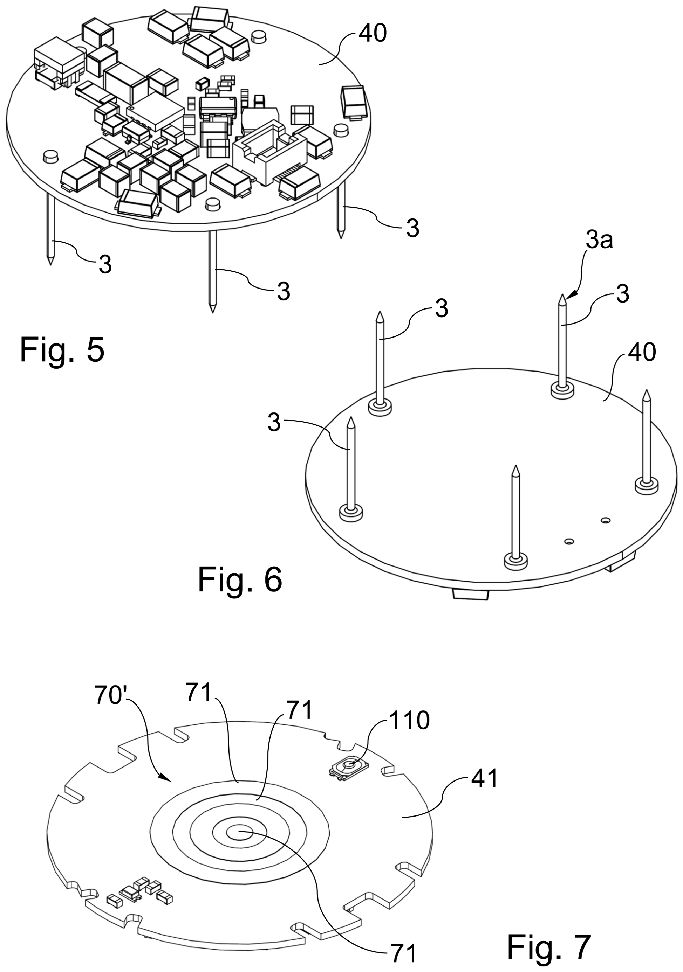

Fig. 2, 4, 8-11 zeigen die steckerähnlich ausgebildete Versorgungsvorrichtung 1 in unterschiedlichen Ansichten, Fig. 3 zeigt eine Gebrauchssituation der Versorgungsvorrichtung 1 zusammen mit einem beispielhaften elektrischen Verbraucher 377, und Fig. 5-7 zeigen Einzelteile der Versorgungsvorrichtung 1.

Die Versorgungsvorrichtung 1 weist ein Gehäuse 2 auf, das mit einer, in einem Querschnitt des Gehäuses 2 gesehen, im Wesentlichen kreisrunden Außenkontur 20 ausgebildet ist. Das Gehäuse 2 ist mit einem inneren Gehäuseteil 21 und einem äußeren Gehäuseteil 22 gebildet, wobei die Gehäuseteile 21 und 22 außenseitig jeweils mit einer im Wesentlichen kreiszylindrischen Form gebildet sind. Hierbei weist das äußere Gehäuseteil 22 einen Innenbereich auf, in dem das innere Gehäuseteil 21 koaxial zu dem äußeren Gehäuseteil 22 aufnehmbar ist. Das äußere Gehäuseteil 22 kann in einer Variante außenseitig leicht kegelstumpfförmig ausgebildet sein, was in den Figuren beispielhaft dargestellt ist.

Das innere und äußere Gehäuseteil 21, 22 sind in einem zusammengebauten Zustand der Versorgungsvorrichtung 1 relativ zueinander bewegbar miteinander gekoppelt. Hierbei ist das innere Gehäuseteil 21 entlang einer gemeinsamen Axialrichtung A der Gehäuseteile 21, 22 relativ zu dem äußeren Gehäuseteil 22 verschiebbar. Um ein Verkippen und Verklemmen der Gehäuseteile 21, 22 relativ zueinander zu verhindern, ist das innere Gehäuseteil 21 mit sich parallel zu der Axialrichtung A auf einer Außenumfangsfläche des Gehäuseteils 21 erstreckenden, rippenartigen Führungsvorsprüngen 55 ausgebildet, die mit korrespondierenden Führungsausnehmungen 58 des äußeren Gehäuseteils 22 zusammenwirken und hierdurch das innere Gehäuseteil 21 bei dessen Bewegung relativ zum äußeren Gehäuseteil 22 führen. Ein Verkippen, Verdrehen und Verklemmen der beiden Teile 21, 22 wird somit vermieden und eine saubere Führung erzielt.

Das innere und das äußere Gehäuseteil 21, 22 sind jeweils mittels Spritzgießens ausgebildet oder mittels 3D-Druck hergestellt. Vorzugsweise sind die Gehäuseteile 21, 22 jeweils mit einem Kunststoffmaterial gebildet.

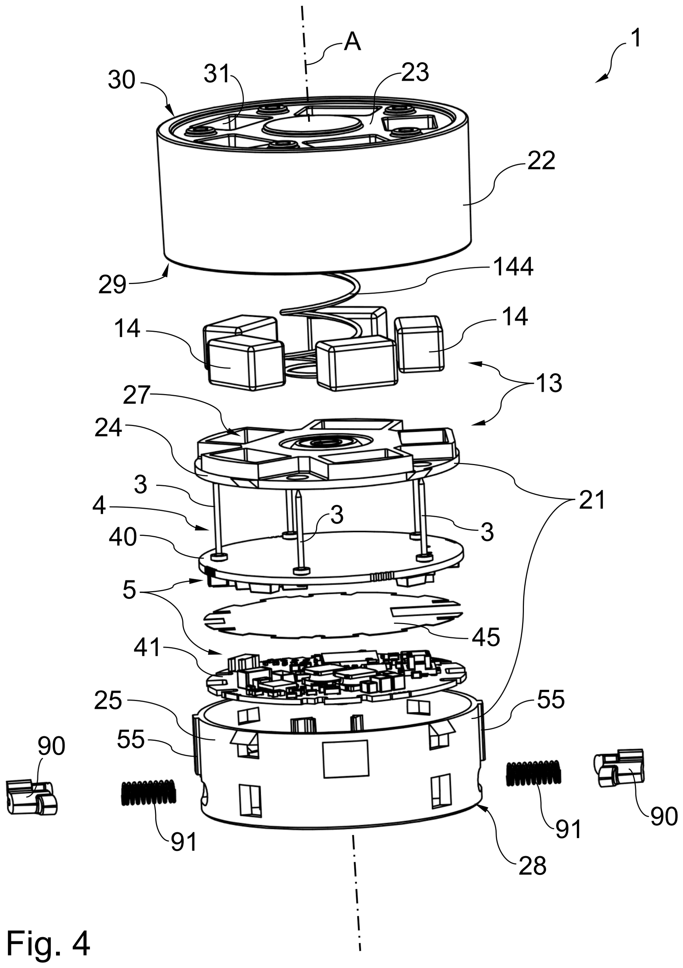

Fig. 4 beispielsweise illustriert den Aufbau der Versorgungsvorrichtung 1 mit mehr Detail. Das äußere Gehäuseteil 22 ist im Wesentlichen als ein hohles, einstückiges, außenseitig zylinderförmiges Element ausgebildet, das auf einer Stirnseite 30 desselben einen durchbrochenen Boden 23 aufweist. Das innere Gehäuseteil 21 ist mit zwei einzelnen, miteinander verbundenen, beispielweise verrasteten, Elementen 24 und 25 gebildet. Das Element 25 ist als ein außenseitig wiederum im Wesentlichen zylindrischer Hohlkörper mit einem stirnseitigen Boden 26 ausgebildet, wobei das Element 25 im Bereich seiner Außenumfangsfläche die Führungsvorsprünge 55 sowie eine Anzahl an Rastvorsprüngen und Durchbrüchen aufweist. Das Element 24 ist als ein flacher Rahmen mit einem im Wesentlichen kreisrunden Außenumfang ausgebildet, mit mehreren Magnetaufnahmen 27 versehen, und dient als ein Magnetträger 24.

In einem Inneren des inneren Gehäuseteils 21 sind zwei flache, scheibenförmige Leiterplatten 40 und 41 koaxial und parallel zueinander untergebracht. Die Leiterplatten 40, 41 sind mit einer Vielzahl von elektrischen und elektronischen Bauteilen bestückt und mittels einer Kontakt- oder Steckereinrichtung, beispielhaft der Steckverbindungseinrichtung 42, elektrisch miteinander verbunden. Die elektrischen und elektronischen Bauteile, mit welchen die Leiterplatten oder Platinen 40, 41 bestückt sind, bilden eine Anordnung 5, die mit mehreren als Kontaktnadeln ausgebildeten Kontaktierelementen 3 elektrisch gekoppelt ist. Hierzu sind die Kontaktierelemente 3 parallel zueinander ausgerichtet und jeweils an einem Ende dieser auf der Leiterplatte 40 mechanisch fixiert und elektrisch leitend mit in den Figuren nicht näher dargestellten Leiterbahnen der Leiterplatte 40 verbunden. An ihren in Bezug auf die Leiterplatte 40 distalen, freien Enden 3a sind die Kontaktierelemente 3 jeweils spitz und/oder scharf ausgebildet.

Die Anordnung 5 elektrischer und elektronischer Bauteile beinhaltet insbesondere eine Gleichrichtereinrichtung und kann ferner eine Steuereinrichtung, eine Treibereinrichtung und/oder einen Hot-Plug-Schutz umfassen. Zum Beispiel kann die Anordnung 5 eine Steuerungseinrichtung umfassen, die ein drahtlos übermitteltes Steuerungssignal aufnehmen und interpretieren kann, um den Verbraucher zu steuern.

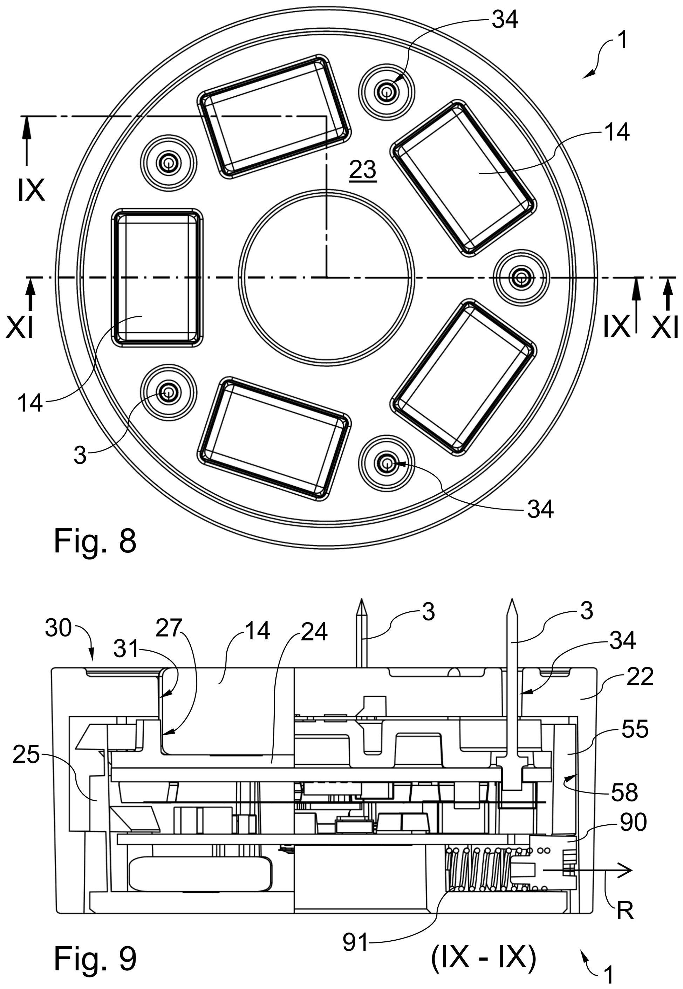

Innerhalb des inneren Gehäuseteils 21 sind die Leiterplatten 40 und 41 derart angeordnet, siehe etwa Fig. 9-11, dass mit der Vielzahl elektrischer und elektronischer Bauelemente bestückte Seiten dieser einander zugewandt sind. Zwischen den beiden Leiterplatten 40, 41 ist ein scheibenförmiges Isolierelement 45, beispielsweise ein folienartiges Isolierelement 45, angeordnet. Auf diese Weise können die Leiterplatten 40, 41 einander eng benachbart und bauraumsparend angeordnet werden.

Mit den Kontaktierelementen 3 ist eine erste elektrische Kontakteinrichtung 4 der Versorgungsvorrichtung 1 gebildet, mittels der elektrischer Strom von der Trägeranordnung 200 aufgenommen werden kann. Die Versorgungsvorrichtung 1 weist darüber hinaus eine zweite elektrische Kontakteinrichtung 70, oder 70' in einer beispielhaften Variante, auf, die der elektrischen Kontaktierung des Verbrauchers 377 zur Versorgung desselben dient.

Die zweite Kontakteinrichtung 70, 70' ist auf einer von der Leiterplatte 40 abgewandten Seite der Leiterplatte 41 angeordnet und durch eine zentrale Öffnung in dem Boden 26 des inneren Gehäuseteil 21 von außen zugänglich, siehe Fig. 2, 10, 11. Die Kontakteinrichtung 70 ist mit zwei konzentrischen, flächigen Kontakten 71 ausgebildet, wobei ein erster der Kontakte 71 als ein kreisrunder Kreiskontakt 71 und der andere der Kontakte 71 als ein den ersten Kontakt konzentrisch umgebender Ringkontakt 71 ausgebildet ist. In einer Variante, siehe Fig. 7, kann ein zentraler Kreiskontakt 71 von beispielsweise zwei konzentrisch angeordneten Ringkontakten 71 der Kontakteinrichtung 70' mit unterschiedlichen Durchmessern konzentrisch umgeben sein. Andere Anzahlen an Kontakten sind in weiteren Varianten denkbar. Jeder der Kontakte 71 ist durch einen federnden Druckkontakt 72 des Verbrauchers 377 kontaktierbar, um den Verbraucher 377 mit der Versorgungsvorrichtung 1 elektrisch zu koppeln.

Im montierten Zustand ist der Magnetträger 24 mit dem Hohlkörper 25 und den Leiterplatten 40, 41 zu einem Ganzen fest verbunden, beispielsweise durch Verrasten von Rastnasen des Magnetträgers 24 mit einigen der Durchbrüche des Hohlkörpers 25.

In den mehreren Magnetaufnahmen 27 des Magnetträgers 24 sind jeweils ein Magnet 14, insbesondere ein Permanentmagnet, angeordnet und befestigt. Beispielsweise kann der Permanentmagnet 14 jeweils in die Magnetaufnahme 27 eingeklebt sein. Die Magnete 14 sind vorzugsweise gleichartig ausgebildet. Die Magnetaufnahmen 27 sind in Umfangsrichtung um die Axialrichtung A gleichmäßig verteilt an dem Magnetträger 24 vorgesehen.

Bei Zusammenbau der Versorgungsvorrichtung 1 wird zwischen den Gehäuseteilen 21 und 22 eine axial wirkende Druckfeder 144, im Ausführungsbeispiel eine Schraubenfelder, angeordnet. Die Feder 144 bewirkt eine Federbelastung der Gehäuseteile 21, 22 relativ zueinander längs der Axialrichtung A.

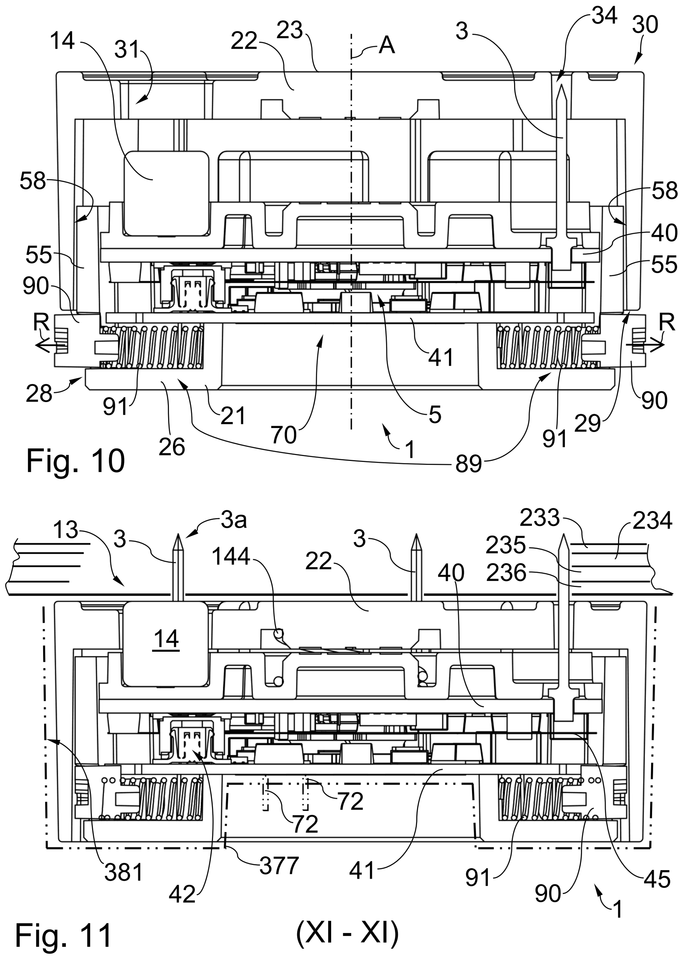

Unter der Wirkung der Feder 144 ragt das innere Gehäuseteil 21 abschnittsweise aus dem äußeren Gehäuseteil 22 in Axialrichtung A heraus. Dieser Zustand ist in Fig. 2 und 10 dargestellt. Durch Verrasten von innerem und äußerem Gehäuseteil 21, 22 gebildete Anschläge verhindern, dass das innere Gehäuseteil 21 unter der Wirkung der Feder 144 vollständig aus dem äußeren Gehäuseteil 22 herausgedrückt wird.

Im Zustand der Fig. 2 und 10 befinden sich die Kontaktierelemente 3 in einer Nichtkontaktierstellung, in der sie vollständig innerhalb des Gehäuses 2 aufgenommen sind. Durch Verschieben des inneren Gehäuseteils 21 relativ zum äußeren Gehäuseteil 22 in dieses hinein können die Kontaktierelemente 3 gemeinsam mit dem inneren Gehäuseteil 21 relativ zum äußeren Gehäuseteil 22 entlang der Axialrichtung A verlagert werden. Der Boden 23 des äußeren Gehäuseteil 22 auf dessen Stirnseite 30 ist mit Ausnehmungen 34 in Form von Durchgangsöffnungen versehen. Die Ausnehmungen 34 sind korrespondierend zur Anzahl und Anordnung der Kontaktierelemente 3 vorgesehen. Bei dem in den Figuren gezeigten Ausführungsbeispiel weist die Versorgungsvorrichtung beispielhaft fünf gleichmäßig längs einer Kreisbahn beabstandet angeordete, somit an den Ecken eines regelmäßigen Fünfecks vorgesehene, der Kontaktierelemente 3 und fünf in gleicher Weise positionierte Ausnehmungen 34 auf. Andere Anzahlen und Anordnungen von Kontaktierelementen sind alternativ jedoch vorstellbar.

Durch manuelles Einschieben des inneren Gehäuseteils 21 in das äußere Gehäuseteil 22, mittels Druck auf den Boden 26, kann ein Ausfahren der Kontaktierelemente 3 an der Stirnseite 30 durch die durchgehenden Ausnehmungen 34, siehe etwa Fig. 9 und 11, bewirkt und die Kontaktierelemente 3 in eine Kontaktierstellung gebracht werden. Die spitzen und/oder scharfen Enden 3a der nadelförmigen Kontaktierelemente 3 stehen somit aus dem Gehäuse 2 hervor.

Um zu verhindern, dass die Kontaktierelemente 3 bei der Handhabung der Versorgungsvorrichtung 1 unbeabsichtigt aus dem Gehäuse 2 ausgefahren werden, ist die Versorgungsvorrichtung 1 gemäß dem Ausführungsbeispiel mit einer Sicherheitsanordnung 8 ausgestattet. In einer Sperrkonfiguration derselben wird ein Ausfahren der Kontaktierelemente 3 auf mechanische Weise verhindert.

Die Sicherheitsanordnung 8 weist einen manuell betätigbaren Sperr- und Freigabemechanismus 89 auf, der mit zwei Sperrelementen 90 ausgebildet ist. Die beiden Sperrelemente 90 sind als Druckbetätigungselemente ausgebildet und an einem Umfang des inneren Gehäuseteils 21 diametral, mit anderen Worten um 180 Grad um die Axialrichtung A versetzt, gegenüberliegend an dem inneren Gehäuseteil 21 angeordnet. Die beiden Sperrelemente 90 sind jeweils, unabhängig voneinander, in einer Richtung R radial bezüglich der Axialrichtung A nach außen federbelastet bewegbar. Insbesondere kann jedes der Sperrelemente 90 gegen die Wirkung eines als Druckfeder, beispielhaft in Form einer Schraubenfeder, ausgebildeten Federelements 91 bezüglich des inneren Gehäuseteils 21 radial einwärts verschoben werden. Mit anderen Worten kann jedes der Sperrelemente 90, als eine Art seitlicher Druckknopf am inneren Gehäuseteil 21, in radialer Richtung R gegen die Wirkung des jeweiligen Federelements 91 in das innere Gehäuseteil 21 eingedrückt werden.

Die Sperrelemente 90 sind an einem Endabschnitt 28 des inneren Gehäuseteils 21 angeordnet, der im Zustand der Fig. 2 und 10, entsprechend der eingefahrenen Nichtkontaktierstellung der Kontaktierelemente 3, aus dem äußeren Gehäuseteil 22 ragt. Jedes der Sperrelemente 90 ist hierbei in radialer Richtung R an dem Hohlkörper 25 des inneren Gehäuseteils 21 verschiebbar geführt und hierdurch bewegbar gelagert.

Die Sperrelemente 90 sind auf diese Weise insbesondere derart angeordnet, dass sie durch die Bedien- oder Monteursperson gezielt und absichtsvoll, beispielsweise unter Zuhilfenahme von Daumen und Zeigefinger, radial eingedrückt werden können.

Werden die Sperrelemente 90 nicht gegen die Federelemente 91 eingedrückt, befinden sich also in deren unbetätigtem Zustand, so ragen die Sperrelemente 90 jeweils von dem inneren Gehäuseteil 21 radial weg über einen ringförmigen Rand 29 des äußeren Gehäuseteils 22 hinaus.

Jedes der Sperrelemente 90 ist auf diese Weise als ein durch das Federelement 91 in Radialrichtung R federbelasteter Sperrkörper ausgebildet, der das Einschieben des inneren Gehäuseteils 21 in das äußere Gehäuseteil 22 und damit das Ausfahren der Kontaktierelemente 3 blockiert.

Um die Sicherheitsanordnung 8 in eine Freigabekonfiguration zu bringen, in der das innere Gehäuseteil 21 relativ zum äußeren Gehäuseteil 22 durch manuelle Einwirkung axial in letzteres eingeschoben werden kann, betätigt die Bedien- oder Monteursperson manuell, etwa mittels Daumen und Zeigefinger, zunächst beide der Sperrelemente 90 zugleich und hält diese betätigt. Werden beide Sperrelemente 90 in dieser Weise hinreichend eingedrückt und eingedrückt gehalten, kann das innere Gehäuseteil 21 in das äußere Gehäuseteil 22 eingedrückt und vollständig darin aufgenommen werden. Die Freigabekonfiguration der Sicherheitsanordnung 8 ermöglicht somit das Ausfahren der Kontaktierelemente 3.

Um einen elektrischen Verbraucher, beispielsweise eine Leuchte wie etwa den beispielhaft als Strahler zur Abgabe von Licht L ausgebildeten und mit einem bewegbaren Strahlerkopf 378, einem Verbindungsstück 379 und einem Strahlerfuß 380 versehenen Verbraucher 377 in Fig. 3, an der Trägeranordnung 200 zu befestigen und vermittelt über diese elektrisch zu versorgen, wird zunächst die Versorgungsvorrichtung 1 in dem in Fig. 2 und 10 gezeigten Ausgangszustand bereitgestellt. In diesem Zustand steht das innere Gehäuseteil 21 aus dem äußeren Gehäuseteil 22 in Axialrichtung A hervor. Dieser Zustand mit ins Gehäuse 2 eingefahrenen Kontaktierelementen 3 wird bei nicht an der Trägeranordnung 200 angebrachter Versorgungsvorrichtung 1 durch diese selbsttätig als Standardstellung eingenommen.

Um die Versorgungsvorrichtung 1 an der Oberfläche 237 zu fixieren und eine elektrische Kontaktierung mit der Trägeranordnung 200 zu erreichen, wird die Versorgungsvorrichtung 1 mit der Stirnseite 30 des äußeren Gehäuseteils 22, an der das Gehäuseteil 22 den Boden 23 aufweist, auf die ebene Oberfläche 237 der Trägeranordnung 200 flächig aufgesetzt. In diesem Zustand verhindert die Sperrkonfiguration der Sicherheitsanordnung 8 noch das Ausfahren der Kontaktierelemente 3.

Sodann wird die Sicherheitsanordnung 8 durch radiales manuelles Eindrücken der Sperrelemente 90 und Überwinden der radialen Federkraft der Federelemente 91 in ihre Freigabekonfiguration gebracht. Nun kann das innere Gehäuseteil 21 durch die Bedien- oder Monteursperson mittels manueller Einwirkung auf den Boden 26, unter Überwindung der durch die Feder 144 aufgebrachten axialen Federkraft, axial in das äußere Gehäuseteil 21 eingedrückt werden. Hierdurch bewegen sich die Kontaktierelemente 3 axial durch die Ausnehmungen 34 aus dem Gehäuse 2 heraus, stechen in die Oberfläche 237 der Trägeranordnung 200 ein, und durchstechen die Deckschichten 234, 235 und 236.

Mindestens zwei der Kontaktierelemente 3 dringen hierbei in jeweils eine der Leiterbahnen 233 ein oder durchdringen diese. Die Beabstandung der Leiterbahnen 233 in Richtung quer zu deren Längserstreckung, die Breite der Leiterbahnen 233 und die Abmessungen der Kontaktierelemente 3, sowie die Anordnung und Beabstandung der Kontaktierelemente 3 voneinander an der Versorgungsvorrichtung 1, sind derart relativ zueinander gewählt, dass mindestens eines der Kontaktierelemente 3 bei dem beschriebenen Einstechvorgang eine Leiterbahn 233 der Polarität (plus) und mindestens ein weiteres der Kontaktierelemente 3 eine Leiterbahn 233 der Polarität (minus) trifft und in elektrisch leitenden Kontakt mit dieser tritt. Die Kontaktierelemente 3 befinden sich nun in deren Kontaktierstellung.

Je nach Ausrichtung und Platzierung der Versorgungsvorrichtung 1 auf der Oberfläche 237 können auch mehr als zwei der Kontaktierelemente 3 mit ein- und derselben Polarität in Kontakt treten. Die Anordnung 5 der elektrischen und elektronischen Bauteile, insbesondere die Gleichrichtereinrichtung dieser, ist derart eingerichtet, dass unabhängig von der Positionierung und Ausrichtung der Versorgungsvorrichtung 1 auf der Oberfläche 237 die Kontakte 71 der zweiten elektrischen Kontakteinrichtung 70 oder 70' stets jeweils mit einer Spannung bei einer für die Kontaktierung durch den Verbraucher 377 vorgesehenen Polarität beaufschlagt werden, sofern durch die erste elektrische Kontakteinrichtung 4 mindestens zwei Leiterbahnen 233 unterschiedlicher Polarität kontaktiert sind.

Die Sicherheitsanordnung 8 ermöglicht somit eine angenehme und sichere Handhabung der Versorgungsvorrichtung 1. Die zum Einstechen spitz und/oder scharf ausgebildeten Endbereiche 3a der Kontaktierelemente 3 können erst aus dem Gehäuse 2 ausgefahren werden, wenn die Bedien- oder Monteursperson gezielt und absichtsvoll die Sperrelemente 90 eindrückt. Beschädigungen von Oberflächen mit versehentlich ausgefahrenen Kontaktierelementen 3, oder ein unangenehmer Kontakt der Hand der Bedien- oder Monteursperson mit diesen, wird zuverlässig vermieden.

Ist das innere Gehäuseteil 21 vollständig in das äußere Gehäuseteil 22 eingedrückt, siehe etwa Fig. 9 und 11, so sind die mit dem inneren Gehäuseteil 21 mitbewegten Magneten 14 nahe an der Oberfläche 237 angeordnet und stehen in anziehender Wechselwirkung mit dem magnetischen oder magnetisierbaren Material der Trägeranordnung 200. Auf diese Weise ist die Versorgungsvorrichtung 1 magnetisch lösbar an der Trägeranordnung 200 fixiert. Mit den Permanentmagneten 14, die in den Magnetaufnahmen 27 befestigt sind, ist somit eine Befestigungseinrichtung 13 für die Versorgungsvorrichtung 1 gebildet. Der Boden 23 auf der Stirnseite 30 des äußeren Gehäuseteils 22 ist hierbei mit Durchbrüchen 31 versehen, die in Größen, Form und Position mit dem Magneten 14 korrespondieren, so dass eine möglichst direkte Wechselwirkung dieser mit der Trägeranordnung 200 erreichbar ist. Auf diese Weise können die Magneten 14 nahe an die Oberfläche 237 herangeführt werden und bei der Bewegung des inneren Gehäuseteils 21 abschnittsweise jeweils in einen der Durchbrüche 31 eingeführt werden.

Nach dem Anbringen der Versorgungsvorrichtung 1 an der gewünschten Stelle auf der Oberfläche 237 wird der Verbraucher 377, beispielhaft in Fig. 3 dargestellt, auf die Versorgungsvorrichtung 1 aufgesetzt. Der Verbraucher 377 ist hierzu, in Fig. 3 im Bereich des Strahlerfußes 380, mit einer Ausnehmung 381 ausgestattet, die eine im Wesentlichen zylindrische oder leicht kegelstumpfförmige Form mit einem kreisrunden Innenquerschnitt aufweist. Die Ausnehmung 381 ist derart ausgebildet und bemessen, dass in der Ausnehmung 381 das Gehäuse 2 der Versorgungsvorrichtung 1 vollständig und passend aufnehmbar ist, wenn sich die Kontaktierelemente 3 in deren Kontaktierstellung befinden. Bei dem Aufsetzen gelangen zugleich die federnden Druckkontakte 72 des Verbrauchers 377 in elektrischen leitenden Kontakt mit den Kreis- und Ringkontakten 71.

Das in der Ausnehmung 381 aufgenommene Gehäuse 2 ist hierbei in Umfangsrichtung dessen durch den Verbraucher 377 umschlossen und in Axialrichtung A im Wesentlichen vollständig aufgenommen. Alternativ könnte vorgesehen sein, dass das Gehäuse 2 nur mit einem Teil dessen axialer Erstreckung in der Ausnehmung 381 aufnehmbar ist, so dass es mit dem Verbraucher 377 in der Axialrichtung A überlappt.

Der Verbraucher 377 ist, beispielhaft im Bereich des Strahlerfußes 380, ebenfalls mit weiteren Magneten 390, insbesondere Permanentmagneten, ausgestattet, die es ermöglichen, durch Wechselwirkung mit dem magnetischen bzw. magnetisierbaren Material der Trägeranordnung 200 den Verbraucher 377 lösbar an der Trägeranordnung 200 zu halten.

Durch den kreisrunden Außenquerschnitt der Versorgungsvorrichtung 1 im Zusammenwirken mit dem kreisrunden Innenquerschnitt der Ausnehmung 381 kann der Verbraucher 377 beliebig und ohne Einschränkungen um die Versorgungsvorrichtung 1 verdreht werden, was zu einer hohen Flexibilität im Gebrauch beiträgt. Die konzentrische Anordnung der Kontakte 71, koaxial zur Axialrichtung A, ermöglicht das ungehinderte Verdrehen des Verbrauchers 377 um das Gehäuse 2 ohne Unterbrechung der Stromversorgung des Verbrauchers 377, wobei die Druckkontakte 72 auf den Kontakten 71 gleiten können.

Nach dem Einstechen in die Oberfläche 237 sind die Kontaktierelemente 3 im Wesentlichen durch Reibungskräfte in den Schichten der Trägeranordnung 200 sowie die Magnetkraft der Magneten 14 gegen die Kraft der Feder 144 außerhalb des Gehäuses 2 gehalten. Zusätzlich kann ferner, nach Aufsetzen des Verbrauchers 377, dieser in seinem magnetisch an der Oberfläche 237 fixierten Zustand dazu beitragen, dass das innere Gehäuseteil 21 in das äußere Gehäuseteil 22 eingedrückt verbleibt.

Wird nach Abnehmen des Verbrauchers 377 die Versorgungsvorrichtung 1 von der Oberfläche 237 abgezogen, beispielsweise um sie anderweitig neu zu platzieren, dann werden die Kontaktierelemente 3 selbsttätig durch die Wirkung der Feder 144 auf die Gehäuseteile 21, 22 in das Gehäuse 2 eingezogen. Die Feder 144 bildet somit eine Rückstelleinrichtung, die die Kontaktierelemente 3 in Richtung der Nichtkontaktierstellung vorspannt. Spitze und/oder scharfe Bereiche 3a dieser sind somit wiederum sicher im Gehäuse 2 untergebracht. Zugleich bewegt sich hierbei der Endbereich 28 des inneren Gehäuseteils 21, der zuvor dem Verbraucher 377 zugewandt war, relativ zu dem äußeren Gehäuseteil 22 wieder in eine Position, in der er über den Rand 29 übersteht. Die Sicherheitsanordnung 8 nimmt hierbei automatisch wieder ihre Sperrkonfiguration ein, indem die Sperrelemente 90 unter Wirkung deren Federbelastung radial nach außen über den Rand 29 hinaus vorspringen. Ein erneutes Ausfahren der Kontaktierelemente 3 ist wiederum nur gezielt und absichtsvoll möglich, ein versehentliches Ausfahren ist verhindert.

Zu dem vorstehend beschriebenen automatischen Einfahren der Kontaktierelemente 3 und Überführen der Sicherheitsanordnung 8 in deren Sperrkonfiguration kommt es ebenfalls, wenn die Versorgungsvorrichtung 1 durch Unachtsamkeit, versehentliche übermäßige Krafteinwirkung, Anstoßen oder dergleichen sich unbeabsichtigt von der Oberfläche 237 lösen sollte.

Die Versorgungsvorrichtung 1 ist zusätzlich noch mit einer Anzeigeeinrichtung 110 ausgestattet, die mit einer LED-Einrichtung ausgebildet und auf der Leiterplatte 41 angeordnet ist. Die Anzeigeeinrichtung 110 ist dafür eingerichtet, der Bedien- oder Monteursperson zu signalisieren, dass mindestens zwei Kontaktierelemente 3 Leiterbahnen 233 unterschiedlicher Polarität kontaktieren, so dass elektrische Energie von der Trägeranordnung 200 bezogen werden kann. Die LED-Einrichtung der Anzeigeeinrichtung 110 ist von der Seite des Bodens 26 des inneren Gehäuseteils 21 sichtbar, wofür der Boden 26 mit einer Durchgangsöffnung versehen ist, deren Position jener der Anzeigeeinrichtung 110 korrespondiert.

In weiteren Varianten des vorstehend unter Bezugnahme auf die Figuren beschriebenen Ausführungsbeispiels ist die zweite Kontakteinrichtung 70 der Versorgungsvorrichtung 1 nicht notwendigerweise mit flachen, konzentrischen Kreis- und Ringkontakten 71 ausgebildet. Stattdessen könnte die zweite Kontakteinrichtung 70 mit einer Komponente einer Steckverbindung ausgebildet sein. Bei der Steckverbindung kann es sich zum Beispiel um eine USB-Steckverbindung oder eine koaxiale DC-Steckverbindung handeln. Zum Beispiel kann die zweite Kontakteinrichtung der Versorgungsvorrichtung 1 mit einer USB-C-Buchse oder eine koaxialen DC-Buchse ausgebildet sein.

Bei dem in den Figuren gezeigten Ausführungsbeispiel ist vorteilhaft eine Leuchte als Verbraucher 377 auf die Versorgungsvorrichtung 1 aufgesetzt. Dieses Aufsetzen ist ebenfalls möglich, wenn der Verbraucher anders ausgebildet ist, beispielsweise als eine Anzeigevorrichtung wie etwa ein Monitor, als ein digitaler Bilderrahmen oder als ein Fernsehgerät. Bei größeren Verbrauchern können bei Bedarf mehrere Versorgungsvorrichtungen 1 verwendet werden.

Ein Aufsetzen des Verbrauchers 377 auf die Versorgungsvorrichtung 1 ist jedoch bei anderen Ausführungsbeispielen nicht zwingend. Insbesondere bei einer Ausgestaltung der zweiten Kontakteinrichtung mit einer Komponente einer Steckverbindung, wie vorstehend beschrieben, kann der Verbraucher beispielsweise über ein Kabel mit der zweiten Kontakteinrichtung verbunden werden. In einer derartigen Variante kann die Versorgungsvorrichtung 1 zum Beispiel genutzt werden, um ein Smartphone oder ein Laptop, oder ein Ladegerät für ein Smartphone oder Laptop, mit elektrischer Energie zu versorgen.

Wenngleich die Erfindung vorstehend anhand bevorzugter Ausführungsbeispiele vollständig beschrieben wurde, ist sie nicht darauf beschränkt, sondern auf vielfältige Art und Weise modifizierbar.

### BEZUGSZEICHENLISTE

- 1: Versorgungsvorrichtung
- 2: Gehäuse
- 3: Kontaktierelement
- 3a: Ende
- 4: erste elektrische Kontakteinrichtung
- 5: Anordnung elektrischer und/oder elektronischer Bauteile
- 8: Sicherheitsanordnung
- 13: Befestigungseinrichtung
- 14: Magnet
- 20: Außenkontur
- 21: inneres Gehäuseteil
- 22: äußeres Gehäuseteil
- 23: durchbrochener Boden
- 24: Magnetträger
- 25: Hohlkörper
- 26: Boden
- 27: Magnetaufnahme
- 28: Endabschnitt
- 29: Rand
- 30: Stirnseite
- 31: Durchbruch
- 34: Ausnehmung
- 40: Leiterplatte
- 41: Leiterplatte
- 42: Steckverbindungseinrichtung
- 45: Isolierelement
- 55: Führungsvorsprung
- 58: Führungsausnehmung
- 70, 70': zweite elektrische Kontakteinrichtung
- 71: Ringkontakt
- 72: Druckkontakt
- 89: Sperr- und Freigabemechanismus
- 90: Sperrelement
- 91: Federelement
- 110: Anzeigeeinrichtung
- 144: Feder
- 200: Trägeranordnung
- 233: Leiterbahn
- 234: erste Schicht
- 235: zweite Schicht
- 236: dritte Schicht
- 237: Oberfläche
- 240: Einspeiseeinrichtung
- 241: Betriebsgerät
- 377: Verbraucher
- 378: Strahlerkopf
- 379: Verbindungsstück
- 380: Strahlerfuß
- 381: Ausnehmung
- 390: Magnet
- A: Axialrichtung
- L: Licht
- R: Radialrichtung

## Patentansprüche

1. Versorgungsvorrichtung (1) zur Befestigung an einer flächigen Trägeranordnung (200) mit elektrischen Leiterbahnen (233);
wobei die Versorgungsvorrichtung (1) ein Gehäuse (2), Kontaktierelemente (3) und eine mit den Kontaktierelementen (3) elektrisch gekoppelte Anordnung (5) elektrischer und/oder elektronischer Bauteile aufweist und mit einem elektrischen Verbraucher (377) für dessen Versorgung koppelbar oder gekoppelt ist;
wobei die Kontaktierelemente (3) jeweils für ein Einstechen in eine Oberfläche (237) der Trägeranordnung (200) vorgesehen und jeweils spitz und/oder scharf ausgebildet sind;
wobei die Kontaktierelemente (3) in eine Nichtkontaktierstellung bringbar sind, in der die Kontaktierelemente (3) in dem Gehäuse (2) aufgenommen sind;
wobei die Kontaktierelemente (3) in eine Kontaktierstellung bringbar sind und hierzu mittels manueller Einwirkung auf die Versorgungsvorrichtung (1) aus dem Gehäuse (2) ausfahrbar sind, um mittels der Kontaktierelemente (3) in die Oberfläche (237) der Trägeranordnung (200) einzustechen und mindestens zwei der Kontaktierelemente (3) in Kontakt mit jeweils einer der Leiterbahnen (233) zu bringen; und
wobei die Versorgungsvorrichtung (1) mindestens eine Sicherheitsanordnung (8) aufweist, mittels welcher in einer Sperrkonfiguration derselben ein Ausfahren der Kontaktierelemente (3) mechanisch verhindert ist.

2. Versorgungsvorrichtung nach Anspruch 1,
**dadurch gekennzeichnet, dass** die Sicherheitsanordnung (8) manuell in eine Freigabekonfiguration bringbar ist, in der das Ausfahren der Kontaktierelemente (3) ermöglicht ist.

3. Versorgungsvorrichtung nach einem der vorstehenden Ansprüche,
**dadurch gekennzeichnet, dass** die Versorgungsvorrichtung (1) eine Rückstelleinrichtung (144) beinhaltet, welche dafür ausgebildet ist, die Kontaktierelemente (3) mindestens in deren Kontaktierstellung direkt oder indirekt für ein selbsttätiges Einnehmen der Nichtkontaktierstellung vorzuspannen; und/oder dass das Ausfahren der Kontaktierelemente (3) mittels der manuellen Einwirkung das Überwinden mindestens einer Federkraft beinhaltet.

4. Versorgungsvorrichtung nach einem der vorstehenden Ansprüche,
**dadurch gekennzeichnet, dass** die Sicherheitsanordnung (8) dafür eingerichtet ist, selbsttätig die Sperrkonfiguration einzunehmen, wenn sich die Kontaktierelemente (3) in deren Nichtkontaktierstellung befinden.

5. Versorgungsvorrichtung nach einem der vorstehenden Ansprüche,
**dadurch gekennzeichnet, dass** das Gehäuse (2) ein inneres Gehäuseteil (21) und ein äußeres Gehäuseteil (22) aufweist, wobei das innere und äußere Gehäuseteil (21, 22) relativ zueinander bewegbar miteinander gekoppelt sind und durch eine Bewegung des inneren und äußeren Gehäuseteils (21, 22) relativ zueinander mittels des manuellen Einwirkens die Kontaktierelemente (3) aus dem Gehäuse (2) ausfahrbar sind.

6. Versorgungsvorrichtung nach Anspruch 5,
**dadurch gekennzeichnet, dass** die Kontaktierelemente (3) gemeinsam mit dem inneren Gehäuseteil (21) relativ zu dem äußeren Gehäuseteil (22), insbesondere entlang einer Axialrichtung (A) des Gehäuses (2), verlagerbar sind; und/oder dass das innere Gehäuseteil (21) in der Nichtkontaktierstellung der Kontaktierelemente (3) abschnittsweise aus dem äußeren Gehäuseteil (22) ragt; und/oder dass die Kontaktierelemente (3) an einer Stirnseite (30) des äußeren Gehäuseteils (22) aus diesem ausfahrbar sind.

7. Versorgungsvorrichtung nach Anspruch 5 oder 6,
**dadurch gekennzeichnet, dass** die Sicherheitsanordnung (8) einen manuell betätigbaren Sperr- und Freigabemechanismus (89) aufweist, dessen Betätigung die Sicherheitsanordnung (8) in deren Freigabekonfiguration bringt und ermöglicht, das innere Gehäuseteil (21) relativ zu dem äußeren Gehäuseteil (22) zu bewegen, insbesondere in das äußere Gehäuseteil (22) hinein zu bewegen, bevorzugt einzudrücken, weiter bevorzugt derart einzudrücken, dass das innere Gehäuseteil (21) im Wesentlichen vollständig in dem äußeren Gehäuseteil (22) aufgenommen ist.

8. Versorgungsvorrichtung nach Anspruch 7,
**dadurch gekennzeichnet, dass** der Sperr- und Freigabemechanismus (89) mit mindestens einem federbelasteten, bewegbaren Sperrelement (90) ausgebildet ist, mittels desselben eine Bewegung des inneren Gehäuseteils (21) relativ zum äußeren Gehäuseteil (22), insbesondere ein manuelles Eindrücken des inneren Gehäuseteils (21) in das äußere Gehäuseteil (22), blockierbar ist, wobei das Sperrelement (90) zur Freigabe gegen die Federbelastung manuell bewegbar ist.

9. Versorgungsvorrichtung nach Anspruch 8,
**dadurch gekennzeichnet, dass** der Sperr- und Freigabemechanismus (89) mindestens zwei an einem Umfang des inneren Gehäuseteils (21) federbelastet bewegbar angeordnete, als Druckbetätigungselemente ausgebildete derartige Sperrelemente (90) aufweist, insbesondere zwei an gegenüberliegenden Seiten des inneren Gehäuseteils (21) angeordnete derartige Sperrelemente (90); und/oder dass das oder die Sperrelement(e) (90) an einem Endabschnitt (28) des inneren Gehäuseteils (21), der in einem Zustand, in dem die Kontaktierelemente (3) sich in deren Nichtkontaktierstellung befinden, aus dem äußeren Gehäuseteil (22) ragt, angeordnet ist/sind und in unbetätigtem Zustand von dem inneren Gehäuseteil (21) weg über einen Rand (29) des äußeren Gehäuseteils (22) ragt/ragen; und/oder dass das/die Sperrelement(e) (90) jeweils als ein bezüglich des inneren Gehäuseteils (21) im Wesentlichen radial verschiebbar an oder in dem inneren Gehäuseteil (21) gelagerter, durch ein Federelement (91) für ein Vorstehen in Richtung (R) radial nach außen federbelasteter Sperrkörper ausgebildet ist/sind.

10. Versorgungsvorrichtung nach einem der Ansprüche 5 bis 9,
**dadurch gekennzeichnet, dass** das innere Gehäuseteil (21) Führungsvorsprünge (55) aufweist, die mit korrespondierenden Führungsausnehmungen (58) des äußeren Gehäuseteils (22) zusammenwirken und hierdurch das innere Gehäuseteil (21) bei dessen Bewegung relativ zum äußeren Gehäuseteil (22) bei dem Ausfahren oder Einfahren der Kontaktierelemente (3) führen; und/oder dass das innere Gehäuseteil (21) und das äußere Gehäuseteil (22) mittels mindestens einer zwischen den Gehäuseteilen (21, 22) angeordneten, axial wirkenden Feder (144) relativ zueinander federbelastet sind; und/oder dass die Anordnung (5) elektrischer und/oder elektronischer Bauteile auf einer Leiterplatte oder mehreren Leiterplatten (40, 41) vorgesehen ist, wobei die Leiterplatte(n) (40, 41) an dem inneren Gehäuseteil (21) befestigt und insbesondere in dem inneren Gehäuseteil (21) aufgenommen sind.

11. Versorgungsvorrichtung nach einem der vorstehenden Ansprüche,
**dadurch gekennzeichnet, dass** die Versorgungsvorrichtung (1) eine Befestigungseinrichtung (13) aufweist, welche ein lösbares Fixieren der Versorgungsvorrichtung (1) an der Trägeranordnung (200), insbesondere in einem Zustand, in dem die Kontaktierelemente (3) sich in der Kontaktierstellung befinden, ermöglicht.

12. Versorgungsvorrichtung nach Anspruch 11,
**dadurch gekennzeichnet, dass** die Befestigungseinrichtung (13) mit einem oder mehreren Magneten (14), insbesondere mit einem oder mehreren Permanentmagneten, ausgebildet ist, die mit einem magnetisierbaren oder magnetisierten Material an oder in der Oberfläche (237) der Trägeranordnung (200) zusammenwirken können.

13. Versorgungsvorrichtung nach einem der vorstehenden Ansprüche.
**dadurch gekennzeichnet, dass** das Gehäuse (2) eine runde, insbesondere kreisrunde, Außenkontur aufweist; und/oder dass, wenn sich die Kontaktierelemente (3) in deren Kontaktierstellung befinden, das Gehäuse (2) in einer runden Ausnehmung des Verbrauchers (377) aufnehmbar ist und insbesondere hierbei das in der runden Ausnehmung des Verbrauchers (377) aufgenommene Gehäuse (2) in einer Umfangsrichtung des Gehäuses (2) von dem Verbraucher (377) umschlossen ist und in einer Axialrichtung (A) des Gehäuses (2) mit dem Verbraucher (377) überlappt oder in der Axialrichtung (A) im Wesentlichen vollständig in der runden Ausnehmung des Verbrauchers (377) aufgenommen ist.

14. Versorgungsvorrichtung nach einem der vorstehenden Ansprüche,
**dadurch gekennzeichnet, dass** das Gehäuse (2) mit Ausnehmungen (34) versehen ist, durch die die Kontaktierelemente (3) mittels der manuellen Einwirkung ausfahrbar sind; und/oder dass die Kontaktierelemente (3) als Kontaktnadeln ausgebildet sind; und/oder dass die elektrischen Leiterbahnen (233) der Trägeranordnung (200) durch eine oder mehrere Deckschicht(en) (234-236) der Trägeranordnung (200) bedeckt sind und die Kontaktierelemente (3) jeweils für ein Durchstechen der Deckschicht (234-235) oder Deckschichten (234-236) ausgebildet sind.

15. Versorgungsvorrichtung nach einem der vorstehenden Ansprüche,
**dadurch gekennzeichnet, dass** die Versorgungsvorrichtung (1) eine erste elektrische Kontakteinrichtung (4) aufweist, die mit den Kontaktierelementen (3) gebildet ist, und eine zweite elektrische Kontakteinrichtung (70; 70') zur Kontaktierung und Versorgung des Verbrauchers (377) aufweist; und insbesondere **dadurch gekennzeichnet, dass** die zweite Kontakteinrichtung (70; 70') mit konzentrischen Kreis- oder Ringkontakten (71) ausgebildet ist, welche jeweils durch einen federnden Druckkontakt (72) des Verbrauchers (377) kontaktierbar sind, insbesondere derart, dass ein ungehindertes Verdrehen des Verbrauchers (377) um das Gehäuse (2) der Versorgungsvorrichtung (1) ohne Unterbrechung der Stromversorgung des Verbrauchers (377) ermöglicht ist.
